Europäisches Patentamt

European Patent Office

Office européen des brevets

(19)

(11) Veröffentlichungsnummer: **0 002 698**
**B1**

(12) **EUROPÄISCHE PATENTSCHRIFT**

(21) Anmeldenummer: **78101600.1**

(22) Anmeldetag: **7.12.78.**

(51) Int. Cl.³: **C 02 F 3/02, C 02 F 3/10, C 02 F 3/14**

(54) Verfahren und Einrichtung zur biologischen Reinigung von hochbelasteten Abwässern

(30) Priorität: **23.12.77 DE 2757859**

(43) Veröffentlichungstag der Anmeldung:
**11.07.79 Patentblatt 79/14**

(45) Bekanntmachung des Hinweises auf die Patenterteilung:
**03.09.80 Patentblatt 80/18**

(84) Benannte Vertragsstaaten:
**BE CH DE FR NL SE**

(56) Entgegenhaltungen:
**DE - A - 2 033 669**
**DE - C - 481 126**
**GB - A - 633 064**
**US - A - 3 402 125**

(73) Patentinhaber: **Süddeutsche Zucker-Aktiengesellschaft**
**Maximilianstrasse 10**
**D - 6800 Mannheim 1 (DE)**

(72) Erfinder: **Bastius, Stephan, Dipl.Chem.**
**Kellerstrasse 37**
**D - 8401 Tegernheim (DE)**

(74) Vertreter: **Körber, Wolfhart, Dr.**
**Patentanwälte Dipl.Ing. H. Mitscherlich, Dipl.Ing.**
**K. Gunschmann, Dr.rer.nat. W. Körber, Dipl.Ing.**
**J. Schmidt-Evers**
**Steinsdorfstrasse 10**
**D - 8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 002 698 B1

Verfahren und Einrichtung zur biologischen Reinigung von hochbelasteten Abwässern

Die Erfindung bezieht sich auf ein Verfahren zur wirksamen biologischen Reinigung von hochbelasteten Abwässern, insbeondere Zuckerfabriks-Abwässern, nach dem Oxydationsteich-Verfahren, bei dem durch Belüftungsrotoren in das Stapelteichwasser Luftsauerstoff eingetragen wird. Die Erfindung bezieht sich insbesondere auch auf eine Einrichtung zur Durchführung des Verfahrens.

Bei hochbelasteten Abwässern sind große Luftsauerstoffmengen in das Abwasser einzubringen, um für den aeroben Abbau der Flora und Fauna (Biomasse) des Abwassers den lebensnotwendigen Luftsauerstoff zuzuführen.

Bei einem Verfahren der eingangs genannten Art mit einer Oberflächenbelüftung, wie sie in der DE-AS 1 584 967 beschrieben ist, treten ständig Störungen auf. Eine Erklärung für diese Schwierigkeiten ist u.a., daß z.B. Zuckerfabriks-Abwässer im Laufe der Abbauperiode sich in ihrer molekularen Zusammensetzung ständig ändern. Die zum Anfang der Abbauperiode vorherrschenden großen Moleküle aus dem organischen Material der Rüben werden im Verlauf des Abbaues in kleinere Moleküle gespalten. Diesen Veränderungen müßte sich die Biomasse ständig anpassen was jedoch nicht in ausreichendem Maße der Fall ist. Vielmehr reagiert die Biomasse bei Störungen in der Zudosierung von abzubauendem Stapelteichwasser häufig mit verminderter Abbauleistung.

Zur Überwindung der sich aus einer zu geringen Ausnutzung des Sauerstoffes bzw. einer ungenügenden Steuerung der Sauerstoff-Übertragungsgeschwindigkeit, ergebenden Schwierigkeiten sind bereits verschiedene Vorschläge gemacht worden.

Um den Sauerstoffeintrag in das Abwasser zu erhöhen, wird z.B. in der DE—AS 2 420 977 eine Vorrichtung zur biologischen Abwasserreinigung beschrieben, bei der das Abwasser in einem die Biomasse enthaltenden Belüftungsbehälter mit über der Wasseroberfläche stehender Druckluft von mindestens 2 bar mit Luftsauerstoff vermischt wird.

In der DE—AS 2 550 818 wird ein Verfahren zur biologischen Vollreinigung des Abwassers beschrieben, bei dem das Abwasser zusammen mit Druckluft durch Haftkörper (Schwamm- oder Schaumstoffkörper) zur besseren Versorgung der Biomasse hindurchgepreßt wird. Da sich die Haftkörper in den Belüftungsbehältern aber nach einiger Zeit so stark mit Biomasse zusetzen, geht ihre Abbauleistung wegen zu geringer Sauerstoffversorgung zurück. Die Biomasse insgesamt braucht mehr Sauerstoff als durch verlangsamte Diffusion in die tiefergelegenen Schichten der Biomasse eindringen kann.

Dies hat zur Folge, daß die Biomasse auch bei erhöhtem Sauerstoffgehalt im Abwasser abstirbt. Der Abbau kommt zum Erliegen. Um dies zu verhindern, wird daher in der genannten Schrift auch vorgeschlagen, den flexiblen Schaumstoff-Haftkörper intermittierend in dem Druckbelüftungsbehälter zusammenzudrücken und ihn wieder zu entspannen. Dadurch soll erreicht werden, daß sich die Biomasse in dem Haftkörper erneuert und auch belüftetes Abwasser in die Poren des Haftkörpers eindringen kann. Um dieses Verfahren durchführen zu können, ist ein erheblicher apparativer Aufwand notwendig.

Die DT—AS 2 418 586 beschreibt eine Einrichtung bzw. ein Verfahren, bei dem künstliche Fließ-Strecken in den Klärteichen dadurch geschaffen werden, daß auf der Teichsohle Trennwände, z.B. Well-Asbestzementplatten, in Fundamentbalken gesteckt werden. Auf diesen Trennwänden wird sich vorzugsweise in den sauerstoffreicheren Schichtbereichen der Wasseroberfläche ein mehr oder weniger wirksam arbeitender biologischer Rasen ausbilden. Die Entschlammung und Räumung der Stapelteiche wird durch diese Trennwände jedoch sehr erschwert.

Außerdem wurde als mögliche Verfahrensvariante in der DT—OS 2 418 586 vorgeschlagen, auf schwimmenden Trennwänden aus einem Material wie Well-Asbestplatten einen biologischen Rasen zu erhalten, auf dem sich "Biologie" ansiedeln soll. Da diese Platten kaum luftdurchlässig sind, ist eine solche Unterlage als Besiedlungsraum wenig geeignet.

Theoretisch müssten schwimmende Stoffbahnen einen besseren Besiedlungsraum geben. Sie sind aber nicht genügend verrottungsfest. Die Biomasse und die Aggressivität des Abwassers führen dazu, daß Stoffbahnen bereits nach einigen Wochen zerriessen und die im Teichwasser schwimmenden Stoffreste sich an den Flügelrädern der Rotoren festsetzen würden, was sogar zum Ausfall der Antriebsmotoren führen kann.

Im DE-Gbm 7 415 507 wird ein "Tropfkörper" beschrieben, bei dem hängende Kunststoff-Gewebebahnen mit Abwasser berieselt werden. Der sich ausbildende biologische Rasen wird durch Kaminwirkung in dem Tropfkörperturm belüftet. Für große Durchsatzmengen von hochbelasteten Abwässern, speziell Zuckerfabriks-Abwässern, sind jedoch Tropfkörper wegen der erforderlichen Größe und des Raumbedarfs mit sehr hohen Investitionskosten verbunden und daher wenig geeignet. Überdies ist der Abbau von hochbelastetem Abwasser bekanntlich mit Störungen verbunden. Eine Erklärung für diese Schwierigkieten ist, daß Zuckerfabriks-Abwässer z.B. im Laufe der Abbauperiode sich in ihrer molekularen Zusammensetzung ständig ändern. Die zum Anfang der Abbauperiode Vorherrschenden großen Moleküle aus dem organischen Material der Rüben werden im Verlauf des Abbaues in kleinere Moleküle gespalten. Diesen Veränderungen muß sich auch der biologische Rasen im Tropfkörperturm anpassen — er müß sich ständig erneuern, indem ein Teil der Biomasse abstirbt. der im Nachklärbecken den Schlamm belastet. Bei Störungen in der Zudosierung von abzubauendem Stapelteichwasser reagiert der Tropfkörperrasen, wie eigene Versuche zeigten, sofort mit verminderter Abbauleistung.

Der Erfindung liegt die Aufgabe zugrunde, ein Verfahren der eingangs genannten Art zu schaffen, welches bei Schwankungen in der Menge und Zusammensetzung von hochbelasteten Abwässern, wie sie z.B. in der Zuckerfabrikation anfallen eine verbesserte Reinigungsleistung aufweist.

Zur Lösung dieser Aufgabe wird erfindungsgemäß vorgeschlagen, daß das von den Belüftungsrotoren aufgewirbelte Teichwasser auf ein schräg über der Wasseroberfläche hängendes und sich bis in einen Lebens- und Aufenthaltsraum für Biomasse erstreckendes Kunststoffgewebe gespritzt wird.

Das erfindungsgemäße Verfahren beseitigt die eingangs genannten Schwierigkeiten, indem den abbauenden Bakterien in dem durch Belüftungsrotoren belüfteten Stapelteichwasser günstigere Lebens- oder Aufenthaltsbedingungen geschaffen werden. Es hat sich gezeigt, daß dies überraschend einfach dadurch erreicht wird, indem man im Bereich der Belüftungsrotoren ein Kunststoffgewebe derart anbringt, daß eine in der Luft oberhalb des durch die Rotoren aufgewirbelten Wassers angeordnete Gewebefläche durch das von dem Rotor aufgewirbelte Wasser bespritzt wird. Das untere freie Ende des Kunststoffgewebes soll dabei mit einem Lebens- und Aufenthaltsraum für Biomasse verbunden sein, so daß sich selbsttätig entsprechend dem Grad der Bespritzung in dem Kunststoffgewebe ein Biorasen mit optimalen Lebensbedingungen ausbildet.

Das erfindungsgemäße Verfahren arbeitet problemlos, weil sich an dem Kunststoffgewebe ein gut durchlüfteter Biorasen von selbst ausbildet. Der Abbau kommt auch bei niedrigen Lufttemperaturen von z.B. nur +5°C ohne Störungen in Gang, da eine Überlastung nicht auftreten kann, erfindungsgemäß dadurch, daß das vom Rotor aufgewirbelte Abwasser an das in einem Winkel schräg hängende Gewebe gespritzt wird. So wird automatisch eine abzubauende Belastung an die Biomasse dosiert herangebracht. Es bildet sich bzw. wächst nur die Biomasse, die in den gegebenen Lebensverhältnissen an der Gewebebahn ihre natürlichen Lebensbedingungen vorfindet. In dem Maße, wie der Abbau des Stapelteichwassers vorangeht, also die CSB- und $BSB_5$- Werte abnehmen, ändert sich auch die Population in der Biomasse, und es bleibt stets den Abbaubedingungen angepaßter Biorasen mit optimaler Leistungsfähigkeit erhalten.

Ein Einrichtung mit im Bereich der Wasseroberfläche des Teichwassers angeordneten, drehangetriebenen Belüftungsrotoren zur Durchführung des Verfahrens ist dadurch gekennzeichnet, daß benachbart jedem Belüftungsrotor ein Kunststoffgewebe aufgehängst ist, welches sich in einem spitzen Winkel bis zu einem Lebens- und Aufenthaltsraum für Biomasse in Bereich der Wasseroberfläche erstreckt. Zweckmäßig bildet das Gewebe gegen die Wasseroberfläche des Teichwassers einen Winkel von etwa 30° bis 45°.

In weiterer Ausbildung der erfindungsgemäßen Einrichtung is der Lebens- und Aufenthaltsraum für die Biomasse von einer im Bereich der Wasseroberfläche des Teichwassers schwimmenden oder schwebend aufgehängten Abbaukiste gebildet, bis in welche sich das freie Ende des Kunststoffgewebes erstreckt. Die Kombination Belüftungsrotor mit dem Kunststoffgewebe von ca. 3—5 m Breite und 4—7 m Länge und dem bevorzugten Aufenthaltsraum (Abbaukiste) für die Biomasse, schafft eine um 20% verbesserte Abbauleistung gegenüber dem herkömmlichen Oxydationsteich-Verfahren. Die Steigerung der Abbauleistung kann bis zu 50% bei optimalen Bedingungen betragen. Normal liegt die Verbesserung der Abbauleistung bei 20—30%. Die Steigerung der Abbauleistung reduziert den Energieaufwand um denselben Prozentsatz. Überdies sind die Kosten für die Herstellung der Einrichtung sehr niedrig.

In zweckmäßiger Ausbildung der Einrichtung ist das Gewebe ein feinfasriges Kunststoffgewebe, welches von einer grobmaschigen, gummierten, dickfaserigen Matte getragen wird. Letzetere hält das feinfasrige Kunststoffgewebe in der gewüschten Lage. Zweckmässig umfasst das Kunststoffgewebe weitmaschige Bereiche mit einer Maschenweite in der Größenordnung von 1 $cm^2$ und feinfasrige und feinmaschige Bereichsanteile, welche etwa 30%—50% der Kunststoffgewebefläche ausmachen. Das Kunststoffgewebe ist damit einer Gardine mit eng- und weitmaschiger Musterung vergleichbar.

In zweckmäßiger Ausbildung der Abbaukiste ist diese als flacher, im Bereich der Wasseroberfläche aufgehängter Rahmen ausgebildet und mit einem weitmaschigen Kunststoffnetz bespannt. Der Rahmen kann beispielsweise an einem Gestänge des Rotors aufgehängt sein und aus einem flachen etwa 10—15 cm hohen Holzrahmen einer Ausdehnung von 2 · 4 $m^2$ bestehen, welcher mit einem weitmaschigen Kunststoffnetz vergleichbar einem Fischernetz bespannt ist. Dabei können in weiterer zweckmäßiger Ausbildung der Einrichtung etwa parallel zur Belüftungsrotorachse liegende Stirnseiten des Rahmens als Flüssigkeitsströmungen nicht behindernde Drahtgitter ausgebildet sein. Das Drahtgitter kann beispielsweise aus V2A-Stahl einer Maschenweite bis 10 mm bestehen. Vorteilhaft wird ein Drahtgewebe mit einer Maschenweite von 3 mm under einer Drahtstärke von 1 mm im Durchmesser verwendet.

Zur Vergrößerung des Besiedelungsraumes für die Biomasse sind in weiterer Ausbildung der Erfindung in die Abbaukiste geschäumte Polystyrolstücke und/oder offenporige Schaumstoffreste eingefüllt. Diese Stücke und Reste können beispielsweise würfelförmig mit Kantenlängen von etwa 10 cem zugeschnitten sein.

In der einzigen beigefügten Abbildung ist eine erfindungsgemäße Einrichtung perspektivisch schematisch dargestellt.

Ein Belüftungsrotor 1 ist in einem Rotorrahmen 2 angeordnet, welcher gleichzeitig den nicht dargestellten Antrieb für den Rotor 1 enthält. Der Rahmen 2 weist Schwimmkörper 3 auf, mittels welchen der Rahmen 2 mit Rotor 1 auf einem nicht dargestellten Abwasserteich schwimmt. Mittels einer Befestigungsstange 4 am Rotorrahmen 2 ist ein Kunststoffgewebe 5 so aufgehängt, daß es sich in einem flachen Winkel von oberhalb des Belüftungsrotors 1 bis zur Abwasseroberfläche in eine Abbaukiste 6, welche einen Lebens- und Aufenthaltsraum für Biomasse bildet, hinein erstreckt. Die Abbaukiste 6 ist im Bereich der Wasseroberfläche an einer Stange 7, die sich auf den Schwimmkörpern 3 abstützt, aufgehängt. Die Abbaukiste 6 besteht aus einem etwa rechteckigen flachen Holzrahmen 8, welcher mit einem weitmaschigen Kunststoffnetz 9 bespannt ist wobei aus zeichnerischen Gründen dieses Netz nur an der Unterseite gezeichnet ist. Die schmalen Stirnseiten 10 und 11 des Rahmens 8 sind ebenfalls durchlässig als Drahtnetz ausgebildet, um das Durchströmen der Abbaukiste 6 mit belüftetem Wasser möglichst wenig zu behindern. Durch die Streifen 12 in der Gewebebahn 5 wird angedeutet, daß weitmaschige Bereiche der Kunststoffgewebebahn mit feinfasrigen und feinmaschigen Bereichsteilen durchsetzt sind. Auf die flächenmässige Anordnung und Aufteilung dieser Bereiche zueinander kommt es nicht entscheidend an, wenn über einen genügend großen statistischen Flächenbereich die feinfasrigen und feinmaschigen Bereichsanteile in der Größenordnung von 50% der Kunststoffgewebefläche liegen. In der Abbaukiste 6 können den "Besiedlungsraum" für die Biomasse vergrößernde Körper eingefüllt sein, welche nicht dargestellt sind.

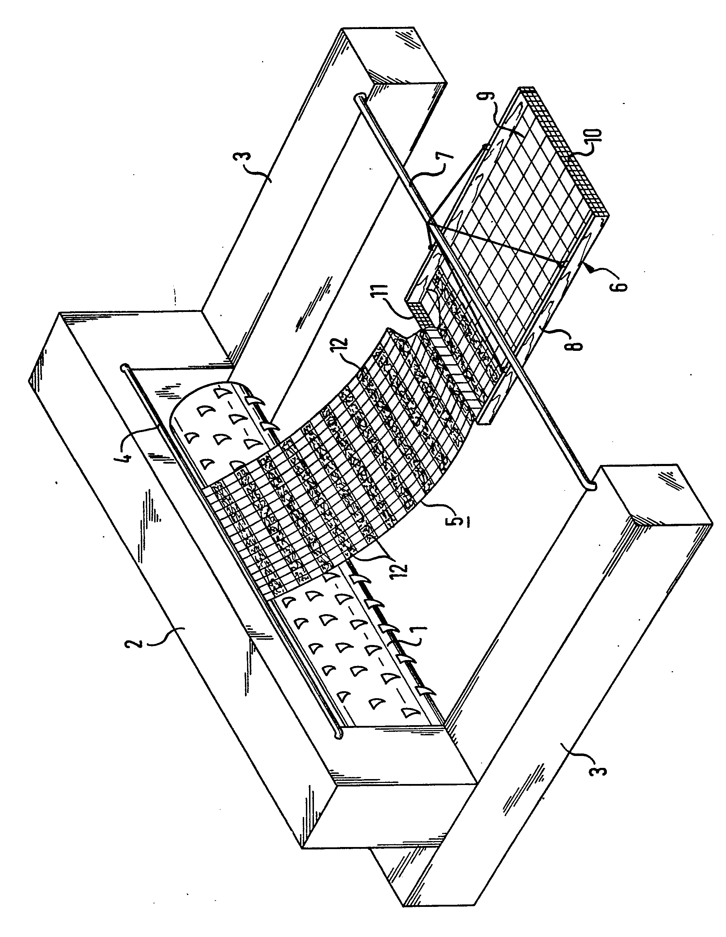

## Patentansprüche

1. Verfahren zur wirksamen biologischen Reinigung von hochbelasteten Abwässern, insbesondere Zuckerfabriks-abwässern, nach dem Oxydationsteich-Verfahren, bei dem durch Belüftungsrotoren in das Stapelteichwasser Luftsauerstoff eingetragen wird, dadurch gekennzeichnet,

daß das von den Belüftungsrotoren aufgewirbelte Teichwasser auf ein schräg über der Wasseroberfläche hängendes und sich bis in einen Lebens- und Aufenthaltsraum für Biomasse erstreckendes Kunststoffgewebe gespritzt wird.

2. Einrichtung zur Durchführung des Verfahrens nach Anspruch 1 mit im Bereich der Wasseroberfläche des Teichwassers angeordneten, drehangetriebenen Belüftungsrotoren, dadurch gekennzeichnet,

daß benachbart jedem Belüftungsrotor (1) ein Kunststoffgewebe (5) aufgehängt ist, welches sich in einem spitzen Winkel bis in einen Lebens- und Aufenthaltsraum (6) für Biomasse im Bereich der Wasseroberfläche erstreckt.

3. Einrichtung nach Anspruch 2, dadurch gekennzeichnet, daß das Gewebe (5) gegen die Wasseroberfläche des Teichwassers einen Winkel von etwa 30° bis 45° bildet.

4. Einrichtung nach Anspruch 2 oder 3, dadurch gekennzeichnet,

daß das Gewebe (5) ein feinfasriges Kunststoffgewebe ist, welches von einer grobmaschigen, gummierten dickfaserigen Matte getragen wird.

5. Einrichtung nach Anspruch 4, dadurch gekennzeichnet, daß das Kunststoffgewebe weitmaschige Bereiche mit einer Maschenweite in der Größenordnung von 1 cm² und feinfasrige und feinmaschige Bereichsanteile (12) umfaßt, welche etwa 30% bis 50% der Kunststoffgewebefläche ausmachen.

6. Einrichtung nach einem der Ansprüche 2—5, dadurch gekennzeichnet,

daß der Lebens- und Aufenthaltsraum für die Biomasse von einer im Bereich der Wasseroberfläche des Teichwassers schwimmenden oder schwebend aufgehängten Abbaukiste (6) gebildet ist, bis in welche sich das freie Ende des Kunststoffgewebes (5) erstreckt.

7. Einrichtung nach Anspruch 6, dadurch gekennzeichnet, daß die Abbaukiste (6) als flacher, im Bereich der Wasseroberfläche aufgehängter Rahmen (8) ausgebildet und mit einem weitmaschigen Kunststoffnetz (9) bespannt ist.

8. Einrichtung nach Anspruch 7, dadurch gekennzeichnet, daß etwa parallel zur Belüftungsrotorachse liegende Stirnseiten (10, 11) des Rahmens (8) als Flüssigkeitsströmungen nicht behindernde Drahtgitter ausgebildet sind.

9. Einrichtung nach einem der Ansprüche 6—8, dadurch gekennzeichnet,

daß zur Vergrößerung des Besiedlungsraumes für die Biomasse in die Abbaukiste (6) geschäumte Polystyrolstücke und/oder offenporige Schaumstoffreste eingefüllt sind.

## Claims

1. A method for the effective biological purification of highly concentrated waste water, particularly waste water of sugar factories, according to the oxidation pond process where

by means of aeration rotors oxygen of the air is carried into the pond water to be purified characterized in that the pond water whirled up by the aeration rotors is sprayed upon a synthetic material netting which is hanging obliquely over the water surface and extends into a living or staying room for biomass (flora and fauna).

2. A device for carrying out the method according to claim 1, comprising rotary-driven aeration rotors arranged in the zone of the water surface of the pond water characterized in that neighbouring each aeration rotor (1) there is suspended a synthetic material netting (5) which extends at an acute angle until it reaches into a staying and living room (6) for biomass in the zone of the water surface.

3. A device according to claim 2, characterized in that the netting (5) forms an angle of about 30° to 45° relative to the water surface of the pond water.

4. A device according to claim 2 or 3, characterized in that the netting (5) is a fine-fibrous synthetic material netting carried by a wide-meshed, rubberized, thick-fibrous net.

5. A device according to claim 4, characterized in that the synthetic material netting includes wide-meshed regions having a mesh width of the magnitude of 1 cm$^2$ and fine-fibrous and fine-meshed region portions (12) which make up about 30% to 50% of the synthetic material netting surface.

6. A device according to one of claims 2 to 5, characterized in that the living and staying room for the biomass is constituted by a decomposition case (6) floating or suspended in the region of the water surface of the pond water, the free end of the synthetic material netting (5) extending as far as to reach into said case.

7. A device according to claim 7, characterized in that the decomposition case (6) is in the form of a flat frame (8) suspended in the zone of the water surface, a wide-meshed synthetic network (9) being stretched over said case.

8. A device according to claim 7, characterized in that front sides (10, 11) of the frame (8) which are approximately parallel to the aeration rotor axis are constructed as wire lattice which does not obstruct the flow of liquid.

9. A device according to one of claims 6 to 8, characterized in that for enlarging the colonization room for the biomass foamed polystyrene pieces and/or open-porous remainders of foam material are filled in the decomposition case (6).

**Revendications**

1. Procédé pour l'épuration biologique efficace d'eaux usées fortement chargées d'impuretés et plus particulièrement des eaux résiduaires de l'industrie sucrière, d'après le procédé du bassin d'oxydation où l'oxygène atmosphérique est introduit dans l'eau d'un bassin collecteur par des rotors d'aération, caractérisé en ce que l'eau du bassin, rejaillissant sous l'action des rotors d'aération est projetée sur un tissu synthétique suspendu en biais au-dessus du niveau de l'eau et s'étendant jusqu'à l'intérieur d'une enceinte contenant la masse biologique et lui servant de biotope.

2. Dispositif pour la réalisation du procédé selon la revendication 1, comportant, dans la zone du niveau d'eau du bassin, des rotors entraînés en rotation, caractérisé en ce que, dans le voisinage de chacun des rotors d'aération, est suspendu un tissu synthétique s'étendant suivant un angle aigu par rapport au niveau d'eau, jusqu'à un biotope habitat pour la masse biologique.

3. Dispositif selon la revendication 2, caractérisé en ce que le tissu délimite, avec le niveau d'eau du bassin, un angle d'environ 30° á 45°.

4. Dispositif selon la revendication 2 où 3, caractérisé en ce que le tissu est un tissu synthétique à fibres fines, porté par une natte en grosses fibres caoutchoutées et à larges mailles.

5. Dispositif selon la revendication 4, caractérisé en ce que le tissu synthétique comporte des zones à grandes mailles, de l'ordre d'un cm$^2$, et des zones à fibres et à mailles fines, ces dernières occupant environ 30 à 50% de la surface du tissu synthétique.

6. Dispositif selon l'une quelconque des revendications 2 à 5, caractérisé en ce que le biotope habitat pour la masse biologique, est constitué par une caisse de dégradation flottante ou suspendue de manière à planer dans la zone du niveau de l'eau contenue dans le bassin, l'extrémité libre du tissu synthétique s'étendant jusqu'à l'intérieur de cette caisse.

7. Dispositif selon la revendication 6, caractérisé en ce que la caisse de dégradation présente la forme d'un châssis ou cadre plat, suspendu dans la zone du niveau d'eau et revêtu d'un filet en matière synthétique à grandes mailles.

8. Dispositif selon la revendication 7, caractérisé en ce que les branches transversales du cadre s'étendant à peu près parallèlement au rotor, sont réalisées sous forme de grillages qui n'entravent pas l'écoulement du liquide.

9. Dispositif selon l'une quelconque des revendications 6 à 8, caractérisé en ce que, pour agrandir l'espace colonisable par la masse biologique, la caisse est remplie de morceaux de mousse de polystyrène cellulaire et/ou de restants de matières mousse poreuses.

0 002 698